# EUROPÄISCHE PATENTSCHRIFT

(11) **EP 0 797 555 B1**
(45) Veröffentlichungstag und Bekanntmachung des Hinweises auf die Patenterteilung: **05.04.2000**
(21) Anmeldenummer: 95936514.9
(22) Anmeldetag: 17.10.1995
(51) Int. Cl.: C04B 35/573, C04B 35/80, F16D 69/02

(54) **REIBEINHEIT**
FRICTION ELEMENT
UNITE DE FRICTION

(30) Priorität: 28.10.1994 DE 4438456
(43) Veröffentlichungstag der Anmeldung: 01.10.1997
(73) Patentinhaber: Deutsches Zentrum für Luft- und Raumfahrt e.V., 53175 Bonn (DE)
(72) Erfinder: KRENKEL, Walter, D-71634 Ludwigsburg (DE); KOCHENDÖRFER, Richard, D-70619 Stuttgart (DE)
(74) Vertreter: Grimm, Ekkehard, Dipl.-Phys.
(86) Internationale Anmeldenummer: EP9504080
(87) Internationale Veröffentlichungsnummer: WO9613471

(56) Entgegenhaltungen:
- EP-A- 0 051 535
- DE-A- 3 540 290
- DE-A- 4 127 113
- GB-A- 1 457 757
- GB-A- 2 137 975

## Beschreibung

Die vorliegende Erfindung bezieht sich auf eine Reibeinheit zum reibenden Eingriff mit einem Gegenkörper, insbesondere Brems- oder Kupplungskörper, mit mindestens einer frei zugänglichen Reibfläche, die aus einem kohlenstoffaserverstärkten, porösen Kohlenstoffkörper gebildet ist, dessen Poren zumindest teilweise mit Silizium und Siliziumkarbid gefüllt sind.

Weiterhin bezieht sich die Erfindung auf ein Verfahren zur Herstellung einer Reibeinheit zum reibenden Eingriff mit einem Gegenkörper, insbesondere von Brems- oder Kupplungskörpern, bei dem ein kohlenstoffaserverstärkter, poröser Kohlenstoffkörper bereitgestellt und mit flüssigem Silizium bei einer Temperatur im Bereich von 1410°C bis 1700°C in einer eingestellten Atmosphäre infiltriert wird.

Solche Reibeinheiten bzw. ein Verfahren zu deren Herstellung wurden von einer Arbeitsgruppe der DLR (Deutsche Forschungsanstalt für Luft- und Raumfahrt e.V.), Stuttgart, Institut für Bauweisen- und Konstruktionsforschung, auf dem VDI-Werkstofftag 1994 in Duisburg am 09./10.03.1994, der unter der Thematik "Leichtbaustrukturen und leichte Bauteile" stand, im Rahmen des Vortrags "Entwicklung integraler Leichtbaustrukturen aus Faserkeramik" vorgestellt. Im Rahmen dieses Vortrags wurde eine Technologie zur Herstellung von kohlenstoffaserverstärkten Kohlenstoffen vorgestellt. Die kohlenstoffaserverstärkten Kohlenstoffe werden nach einem sogenannten "Flüssig-Silizier-Verfahren" mit flüssigem Silizium infiltriert und einer Wärmbehandlung unterworfen, wobei das Silizium sich mit Kohlenstoff zu SiC umwandelt. Ein mögliches Anwendungsgebiet dieser C/C-SiC-Werkstoffe sind unter anderem Bremsscheiben.

An Bremsen, insbesondere im Kraftfahrzeug- und Flugzeugbau, werden zunehmend höhere Anforderungen gestellt. Die Geschwindigkeiten, die heutzutage mit solchen Fahrzeugen erzielt werden, nehmen ständig zu. Beim Abbremsen wird diese kinetische Energie durch Reibung in Wärme umgewandelt, die durch die Bremsscheibe und die Bremsbeläge absorbiert wird. Eine solche Bremsenanordnung ist demzufolge durch die Reibungscharakteristiken des Bremsenmaterials und seine Eigenschaft, Wärme zu speichern und abzuführen, begrenzt. Allgemein müssen Bremsmaterialien sehr gute thermomechanische Eigenschaften, hohe und konstante Reibungscharakteristiken und eine gute Abrasionsbeständigkeit besitzen. Übliche Bremsscheiben aus Gußeisen oder Stahl, die heutzutage im normalen Automobilbau eingesetzt werden, ermöglichen Temperaturen von ungefähr 650 °C. In den letzten Jahren entwickelte Bremsen aus kohlenstoffaserverstärkten Kohlenstoffmaterialien (C/C), wie sie beispielsweise in der DE-A1 30 24 200 beschrieben sind, ermöglichen Temperaturen bis zu 1000 °C, verbunden mit einer gegenüber Gußbremsscheiben erzielbaren Gewichtsverringerung.

Solche Kohlenstoffbremsscheiben haben sich inzwischen im Rennwagenbau und Flugzeugbau durchgesetzt und etabliert. Problematisch hierbei ist neben einigen tribologischen Eigenschaften der hohe Kostenfaktor, unter dem die Bremsscheiben herzustellen sind, der auf dem Gebiet des Rennwagenbaus und des Flugzeugbaus derzeit akzeptiert wird, allerdings nicht für den allgemeinen Fahrzeugbau tragbar ist.

Auf der vorstehend angeführten VDI-Tagung wurde, wie angeführt, ein C/C-SiC-Werkstoff vorgestellt, der gegenüber einem C/C-Werkstoff deutliche Vorteile vor allem in Bezug auf Thermoschockbeständigkeit, Oxidationsbeständigkeit, Feuchteaufnahme und Reibverhalten zeigt.

Aus der DE-A-3540290 sind eine Kohlenstoff-Kohlenstoff-Verbundreibscheibe und ein Verfahren zu ihrer Herstellung bekannt, wobei die Verbundreibscheibe zwei oder mehr Baukomponenten auf Kohlenstoffbasis umfaßt. Die Baukomponenten sind durch eine Zwischenschicht, welche durch Schmelzen an jede der beiden Baukomponenten gebunden ist, fest miteinander verbunden. Als Werkstoff für die Zwischenschicht wird metallisches Material, insgesondere ein Hartlot, oder nicht-metallisches Material, insbesondere Pech, verwendet.

Ausgehend von dem vorstehend beschriebenen Stand der Technik liegt der vorliegenden Erfindung die Aufgabe zugrunde, eine Reibeinheit sowie ein Verfahren zur Herstellung einer solchen Reibeinheit anzugeben, in Verbindung mit der zum einen die Vorteile erzielt werden, die mit den C/C-SiC-Werkstoffen verbunden sind, mit denen zum anderen eine kostengünstige Herstellung möglich ist, so daß diese Reibeinheiten insbesondere für den allgemeinen Fahrzeugbau unter dem Kostenaspekt einsetzbar sind.

Die Aufgabe wird hinsichtlich einer Reibeinheit der eingangs beschriebenen Art gemäß Anspruch 1 gelöst.

Hinsichtlich des Verfahrens der eingangs beschriebenen Art wird die Aufgabe gemäß Anspruch 25 gelöst.

Der Grundgedanke der Erfindung liegt darin, eine solche Reibeinheit mehrteilig aufzubauen, so daß die einzelnen Bereiche einer Reibeinheit den jeweiligen Anforderungen im Einsatz angepaßt werden können. Hierbei ist eine solche Reibeinheit in mindestens einen Kernkörper und mindestens einen Reibkörper unterteilt, wobei letzterer aus kohlenstoffaserverstärkten, porösen Kohlenstoffkörpern, deren Poren zumindest teilweise mit Silizium und Siliziumkarbid gefüllt sind, gebildet ist, und diese beiden Körper zu einer Einheit miteinander verbunden werden. Der Reibkörper kann in seiner Beschaffenheit, d.h. seinem Reibungskoeffizienten sowie seiner Abrasionsbeständigkeit, den erwünschten Anforderungen angepaßt werden. Der Kernkörper dagegen wird so aufgebaut, daß er zum einen als Träger für den Reibkörper geeignet, d.h. eine hohe mechanische Stabilität aufweist, weiterhin Aufnahme-, Adapter- und Verbindungsteile aufnimmt, um ihn an einer feststehenden oder drehenden Einheit zu halten, und schließlich so in seinen Materialeigenschaften angepaßt wird, daß er die entstehende Wärme gut speichert und schnell abführt. Weiterhin ist durch diesen mehrteiligen Verbundaufbau die Möglichkeit gegeben, von Zeit zu Zeit den abgenutzten Bereich des Reibkörpers dadurch zu ersetzen, daß der verbleibende Kernkörper mit einem neuen Reibkörper verbunden wird. Durch diese Wiederverwendung des Kernkörpers können die Kosten solcher Reibeinheiten durch einfachen Ersatz des abgenutzen, abgeriebenen Teils erheblich verringert werden. Darüberhinaus können die Kosten im Rahmen einer Massenherstellung durch die Untergliederung einer Reibeinheit in die einzelnen Körper, d.h. Kernkörper und Reibkörper, mit den angepaßten Materialeigenschaften insbesondere dann verringert werden, wenn solche Reibeinheiten strukturiert werden müssen. Es sind hierzu keine komplizierten Nachbearbeitungsvorgänge erforderlich, da die Teile der Reibeinheit, d.h. der Kernkörper und der Reibkörper, einzeln vorgefertigt und profiliert und erst anschließend an einer gemeinsamen, glatten oder eventuell verzahnten Verbindungsfläche miteinander verbunden werden. Die Technik der Herstellung von C/C-SiC-Körper, die nachfolgend noch näher erläutert wird, erlaubt, solche Teile in einem "grünen" Zustand vorzuformen und zu profilieren, anschließend mit flüssigem Silizium zu infiltrieren und im Rahmen einer Wärmebehandlung zu keramisieren. In grünem Zustand lassen sich diese Formkörper sehr einfach profilieren. Beispielsweise kann der Kernkörper mit entsprechenden Befestigungsprofilierungen ausgestattet und außerdem können Halteelemente in diesen Kernkörper mit eingebaut werden. Im Gegensatz dazu wird der Reibbelag in seiner einfachsten Version als beidseitig glatte, kreisringförmige Scheibe ausgebildet. Eventuelle Belüftungsöffnungen innerhalb einer solchen Reibeinheit können entweder in die Fläche des Kernkörpers, die später mit dem Reibkörper verbunden wird, oder aber in der Verbindungsfläche des Reibkörpers eingearbeitet werden. Durch die Erfindung wird also in einfacher Weise eine Funktionstrennung von teurem Reibvolumen und billigem Kernvolumen erreicht, darüberhinaus eine Optimierung hinsichtlich der dem Reibvolumen und dem Kernvolumen zugeordneten mechanischen und thermischen Eigenschaften ermöglicht. Es hat sich gezeigt, daß zur Verbindung der beiden Körper, d.h. des Kernkörpers mit dem Reibkörper, keine artfremden Materialien eingesetzt werden müssen. Vielmehr wird eine Verbindungsschicht eingesetzt, die im wesentlichen Siliziumkarbid enthält. Zum Verbinden der beiden Körper sind hierzu verschiedene Möglichkeiten gegeben. Zum einen können bei einer Herstellung einer neuen Reibeinheit aus einem Kernkörper und mindestens einem Reibkörper diese beiden Körper vorteilhafterweise als kohlenstoffaserverstärkte, poröse Kohlenstoffkörper vorbereitet werden und anschließend mit Silizium infiltriert werden, wobei diese beiden Körper im Bereich der Verbindungsschicht nach Temperaturbehandlung miteinander verbunden werden. Eine andere Möglichkeit ist dadurch gegeben, daß die beiden Körper, d.h. der Kernkörper und der Reibkörper, als bereits mit Silizium und Siliziumkarbid gefüllte, keramisierte Ausgangskörper bereitgestellt werden, diese beiden Ausgangskörper im Bereich ihrer Verbindungsfläche aufeinandergelegt werden und der Spalt mit Silizium gefüllt wird. Hierzu ist eine Technik bevorzugt, in der dieser Spalt mit Silizium infiltriert und anschließend die gesamte Einheit einer Wärmebehandlung unterworfen wird, wobei Temperaturen im Bereich von 1410 °C bis 1700 °C angewandt werden. Eine solche Technik der Verbindung bereits endbearbeiteter Körper ist dann anzuwenden, wenn eine abgenutzte Reibeinheit, bei der also der Kernkörper, eventuell mit einer nur noch dünnen, vorhandenen Schicht des Reibkörpers, verbleibt, mittels eines neuen Reibkörpers erneuert wird. Um das Infiltrieren des flüssigen Siliziums im Bereich der Verbindungsschicht zu fördern, kann vor der Infiltration zwischen dem Reibkörper und dem Kernkörper eine Einlage aus einem porösen, pyrolysierbaren Material auf Zellulosebasis zwischengefügt werden. Vorzugsweise besteht diese Einlage aus Papier, Pappe und/oder Papierfilz mit einer hohen Porosität, wobei die Dicke vorzugsweise in dem Bereich von 0,1 bis 1 mm liegt. Eine solche Zwischenschicht wird dann mit flüssigem Silizium infiltriert und anschließend die vorbereitete Einheit der Wärmebehandlung unterworfen. Um den Infiltrationsvorgang zu beschleunigen und die Infiltration darüberhinaus in der Zwischenschicht zu vergleichmäßigen, kann im Bereich der zu bildenden Schicht ein Druckgradient während der Infiltration erzeugt bzw. aufrechterhalten werden, beispielsweise durch Anlegen eines Vakuums.

Als Einlage kann auch ein Kohlenstoff-Vlies oder eine Kohlenstoffmatte verwendet werden. Vorzugsweise werden mit solchen Einlagen im Bereich der Verbindungsstelle Unterschiede in den Spalten ausgeglichen. Hierfür ist insbesondere das Material auf Zellulosebasis geeignet. Eine Einlage aus einer Kohlenstoffmatte bzw. aus einem kohlenstoffhaltigen Fasermaterial ist dann zu wählen, wenn im Spalt die Fließrichtung und die Fließgeschwindigkeit beeinflußt werden soll. Es ist allerdings an dieser Stelle hervorzuheben, daß die beiden erwähnten Materialien als Einlage zum größten Teil nach der Infiltration mit flüssigem Silizium und der Wärmebehandlung zu SiC reagieren und damit eine unlösbare Verbindung entsteht. Eine solche Verfahrensweise zum Verbinden der beiden Körper ist dann heranzuziehen, wenn eine Reibeinheit zu einem beliebigen Zeitpunkt mit einem neuen Reibkörper versehen werden soll, ohne daß der alte Reibkörper in irgendeiner Weise vollständig entfernt wird.

Aus der vorstehenden Beschreibung ist ersichtlich, daß mit der angegebenen Verfahrensweise auch mehrfach aufgebaute bzw. mehrschichtige Reibeinheiten hergestellt werden können, wobei beispielsweise ein Kernkörper an zwei zueinander gegenüberliegenden Flächen mit jeweils einem Reibkörper jeweils über eine überwiegend Siliziumkarbid enthaltende Verbindungsschicht verbunden wird. Weiterhin können wechselweise Kernkörper und Reibkörper miteinander verbunden werden, um eine mehrschichtige Reibeinheit zu bilden, wobei jeweils die einzelnen Reibkörper über den Umfang der entsprechenden Kernkörper vorstehen, so daß in die Reibflächen der Reibkörper von außen eingegriffen werden kann. Im Rahmen dieses modulartigen Aufbaus ist es lediglich erforderlich, Reibkörper und Kernkörper zu bevorraten, um diese dann in gewünschter Folge miteinander zu verbinden. Bei den Reibkörpern kann es sich auch um solche handeln, die später auf einen Kernkörper aufgebracht werden, wenn der ursprüngliche Reibkörper abgenutzt ist.

Bevorzugt sollte der Kernkörper eine Porosität von 5 bis 50%, insbesondere im Bereich von 10 bis 30% aufweisen. Diese Poren werden dann mit Silizium infiltriert, das unter Wärmebehandlung zu Siliziumkarbid umgewandelt wird. Die Restporosität sollte weniger als 10% betragen, um diesen Kernkörper mechanisch stabil, allerdings gleichzeitig so elastisch zu gestalten, daß er den Anforderungen als Träger eines Reibkörpers im Einsatz als Kupplungs- oder Bremseinheit genügt.

Um die Wärmeleitfähigkeit des Reibkörpers und/oder des Kernkörpers zu erhöhen, muß darauf geachtet werden, daß Kohlenstoff-Fasern in Dickenrichtung in einem Anteil von 3 bis 10% bezogen auf den Gesamt-Faseranteil vorhanden sind; dies kann durch Verwendung von dreidimensionalen Fasergerüsten oder durch Vernähen von zweidimensionalen Geweben mittels Kohlenstoff-Nähgarn erzielt werden.

Um den Reibkörper seinen Anforderungen im Einsatz anzupassen, werden in den kohlenstoffaserverstärkten, porösen Kohlenstoffkörper reibwertmindernde oder reibwerterhöhende Zusätze eingelagert. Hierbei wird als reibwertmindernder Zusatz zum Beispiel Bornitrid und/oder Aluminiumphosphat verwendet, während als reibwerterhöhender Zusatz zum Beispiel ein Siliziumkarbid-Pulver mit einer Körnung von 0,3 bis 3,0 µm in die Poren eingelagert wird. Durch reibwerterhöhende Zusätze wird der Reibungskoeffizient heraufgesetzt. Der reibwerterhöhende Zusatz in Form von Siliziumkarbid-Pulver hat den Vorteil, daß diese Körnung bzw. dieses Pulver an definierten Stellen dort in dem Reibkörper eingelagert werden kann, wo ein erhöhter Reibwert erwünscht ist.

Es hat sich allerdings herausgestellt, daß solche Reibkörper, wie sie vorstehend beschrieben sind, unter bestimmten Einsatzbedingungen zu einer hohen Geräuschentwicklung, d.h. zu einem Quietschen, neigen. Eine solche Geräuschentwicklung ist im Fahrzeugbau nicht akzeptierbar. Aus diesem Grund ist die Einlagerung von reibwertmindernden Zusätzen in Form des vorstehend angegebenen Bornitrids und/oder Aluminiumphosphats hilfreich, die dazu führt, daß ein solches Quietschen unterbunden werden kann.

Es ist auch denkbar, daß der Reibkörper in verschiedenen Bereichen unterschiedliche Zusätze enthält, also in einem Bereich reibwerterhöhende Zusätze und in einem anderen Bereich reibwertmindernde Zusätze, beispielsweise unter Berücksichtigung der unterschiedlichen Winkelgeschwindigkeiten verschiedener Bereiche eines scheibenartigen, sich drehenden Reibkörpers.

Der Kernkörper kann in kostengünstiger Weise aus porösem Kohlenstoff oder zumindest teilweise aus Kohlenstoffasern hergestellt werden. Durch den Einsatz dieser Materialien für den Kernkörper können die Kosten für den Kernkörper verringert werden. Falls der gesamte Kernkörper aus Kohlenstoffasern gebildet wird, sollten die einzelnen Lagen der Fasern aufeinandergestapelt oder gewickelt werden, wobei die Orientierung der Fasern in benachbarten Lagen unterschiedlich sein kann, gerichtet oder ungerichtet. Bevorzugt liegt die Faserlänge zwischen 1 und 10 mm, so daß sich eine gut vernetzte, poröse Struktur eines Vorkörpers ergibt, der anschließend mit Silizium infiltriert wird. Andererseits kann der Kernkörper auch aus Siliziumkarbid oder einer Mischung aus Siliziumkarbid und Graphit gebildet werden. In Form des Siliziumkarbids wird ein billiges Material eingesetzt, das darüberhinaus eine hohe Wärmeleitfähigkeit besitzt und demnach den Anforderungen eines Kernkörpers gerecht wird.

Der Gehalt der Verbindungsschicht an Siliziumkarbid in der fertiggestellten Reibeinheit liegt oberhalb 50%. Hierdurch wird ein guter Wärmeübergang zwischen der Reibeinheit, in der die Wärme erzeugt wird, und dem Kernkörper, der die Wärme speichern und abführen soll, erzielt.

Weiterhin ist es als bevorzugt anzusehen, eine Verbindungsschicht zu bilden, die einen Schlickerzusatz aufweist, der aus einem organischen Bindemittel mit einem Restkohlenstoffgehalt von mindestens 40% und ein feinkörniges Pulver aus Kohlenstoff und/oder Silizium aufweist, wobei der Bindemittelanteil zwischen 10 und 50% beträgt. Als Bindemittel kann hierbei zum Beispiel Phenol eingesetzt werden. Hierdurch wird erreicht, daß die Menge des zugesetzten Kohlenstoff-Pulvers gering gehalten und eine hohe Ausbeute an SiC erhalten werden kann.

Die Herstellung eines C/C-SiC-Körpers kann kurz wie folgt zusammengefaßt dargestellt werden:

Zunächst erfolgt die Herstellung eines porenfreien und homogenen kohlenstoffaserverstärkten Kohlenstoffkörpers als Vorkörper, bestehend aus kohlenstoffreichen Polymeren als Matrices und Endlosfasern. Im zweiten Fertigungsschritt erfolgt die thermische Umwandlung der Matrix durch Pyrolyse zu glasartigem Kohlenstoff, was zu einem kohlenstoffaserverstärkten, porösen Kohlenstoffkörper mit translaminaren Kanälen führt. Im dritten Fertigungsschritt wird in die Poren flüssiges Silizium infiltriert, das unter Wärme mit dem Kohlenstoff der Matrix zu Siliziumkarbid reagiert. Alle Fertigungsschritte werden nur einmal durchlaufen, im Gegensatz zu anderen bekannten Verfahren; das Ergebnis ist eine dichte Gefügestruktur bestehend aus hochfesten Kohlenstoff-Faserbündeln und oxidationshemmenden Siliziumkarbidschutzschichten, von denen diese Faserbündel umgeben werden.

Weitere bevorzugte Merkmale der Erfindung ergeben sich aus den Unteransprüchen.

Weitere Einzelheiten und Merkmale der Erfindung ergeben sich aus der nachfolgenden Beschreibung von Ausführungsbeispielen anhand der Zeichnung. In der Zeichnung zeigt
- Figur 1A: eine Photographie einer C/C-SiC-Bremsscheibe für ein Kraftfahrzeug,
- Figur 1B: eine Darstellung eines Bremsklotzes,
- Figur 2: eine Photographie einer Mehrscheibenbremsanordnung wie sie zum Beispiel für Flugzeuge eingesetzt werden kann;
- Figur 3: eine schematische Darstellung eines Kernkörpers und zwei Reibkörper im Schnitt vor ihrer Zusammenfügung mit einer Außenkonfiguration entsprechend Figur 1,
- Figur 4: die einzelnen Körper der Figur 3 nach dem Zusammenfügen,
- Figur 5A und 5B: eine der Anordnung der Figuren 3 und 4 ähnliche Reibeinheit, in der Kühlkanäle gebildet sind,
- Figur 6: eine Schnittdarstellung einer weiteren Ausführungsform einer Reibeinheit mit zwei Reibkörpern, die über vier Kernkörper miteinander verbunden sind,
- Figur 7: eine perspektivische Darstellung einer erfindungsgemäßen Bremsscheibe mit einer profilierten Aufnahmeseite sowie einem fahrzeugseitigen Adapterteil in einer Explosionsdarstellung, und
- Figur 8: eine Kupplungs-Reibeinheit für ein Kraftfahrzeug in einer perspektivischen Ansicht mit einer Druckplatte vor dem Zusammenbau.

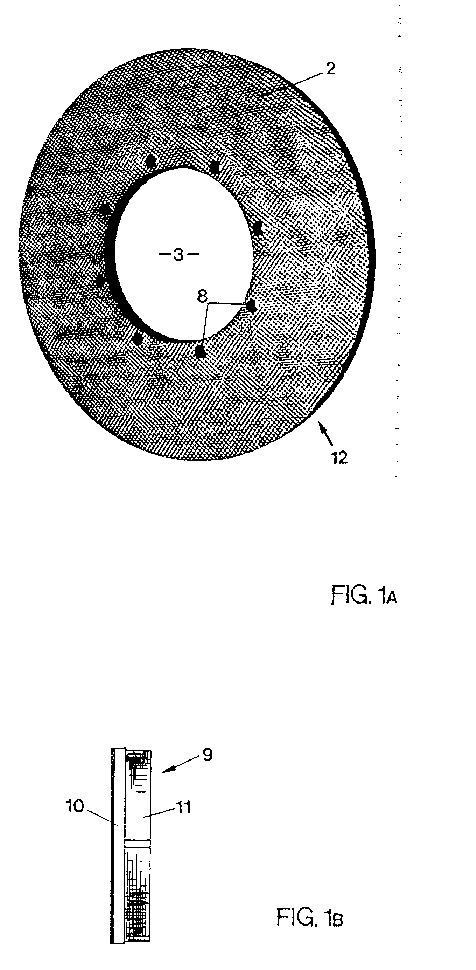

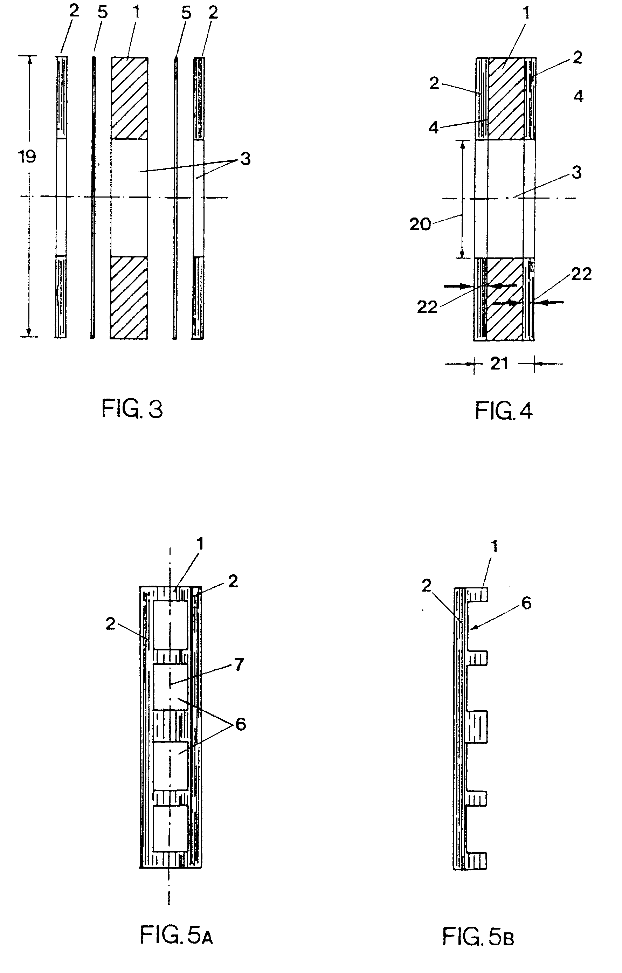

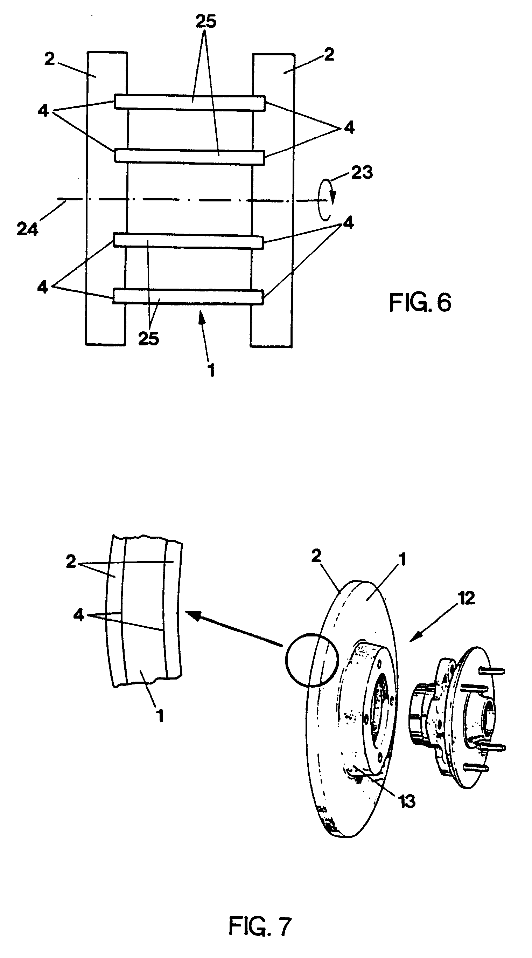

Eine erfindungsgemäße Reibeinheit zur Verwendung als Brems- oder Kupplungskörper, wie dies die Figur 1 und die Figur 7 zeigen, ist in den Figuren 3 und 4 dargestellt. Diese Reibeinheit weist einen Kernkörper 1 sowie zwei Reibkörper 2 auf. Solche Körper 1, 2 sind als flache Scheiben mit einer mittigen Durchgangsöffnung 3 gefertigt. Der Kernkörper 1 und der Reibkörper 2 sind, entsprechend Figur 3, aus einem kohlenstoffaserverstärkten, porösen Kohlenstoffkörper hergestellt, der mit flüssigem Silizium bei einer Temperatur im Bereich von 1.410°C bis 1.700°C in einer eingestellten Atmosphäre infiltriert wird. Diese so vorgefertigten Körper 1, 2 werden dann in der in Figur 4 dargestellten Anordnung, in der die beiden Reibkörper zweiflächig auf dem Kernkörper 1 aufliegen und die einzelnen Durchgangsöffnungen 3 zueinander ausgerichtet sind, über eine Verbindungsschicht 4 miteinander verbunden. Die Verbindungsschicht 4 ist eine im wesentliche Siliziumkarbid enthaltende Schicht. Zum Verbinden werden die einzelnen vorgefertigen Körper 1, 2 flächig aufeinandergelegt, in eine Konditioniereinheit eingefügt, und es wird in dem Spalt zwischen den einzelnen Körpern 1, 2 flüssiges Silizium infiltriert und dann keramisiert. In dem Fall, wo die miteinander zu verbindenden Flächen des Kernkörpers 1 und der beiden Reibkörper 2 einen zu großen Spalt im Bereich der Verbindungsstelle besitzen, wird eine Einlage 5, wie dies in Figur 3 angedeutet ist, aus einem porösen, pyrolysierbaren Material auf Zellulosebasis eingelegt, vorzugsweise eine Pappe oder ein Papierfilz mit einer hohen Porosität. Diese Einlage 5 sollte eine Dicke zwischen 0,1 und 0,5 mm haben. Nach der Infiltration wird diese Einlage 5 bei der Pyrolyse verbrannt und vollständig in Kohlenstoff bzw. mit dem infiltrierten Silizium zu SiC umgesetzt. Aufgrund der Artgleichheit der Verbindungsschicht aus SiC mit der Füllung der Poren der Reibkörper 2 und des Kernkörpers 1 aus SiC wird eine hochfeste Verbindung zwischen den einzelnen Teilen erzielt; die Festigkeit der Einheit an der Verbindungsstelle entspricht der Gesamtfestigkeit der Reibeinheit.

Als Einlage 5 kann auch ein Kohlenstoff-Vlies oder eine Kohlenstoffmatte verwendet werden. Auch ist es möglich, die beiden Körper formschlüssig miteinander zu verbinden, beispielsweise durch Verstiften mit Bolzen aus Kohlenstoff oder SiC.

Vorzugsweise weist die Verbindungsschicht 4 einen Schlickerzusatz auf, der aus einem organischem Bindemittel mit einem Restkohlenstoffgehalt von mindestens 40% und einen feinkörnigen Pulver, Korngröße 1 bis 10 µm, aus Kohlenstoff und/oder Silizium, gebildet ist, wobei der Bindemittelanteil zwischen 10 und 50% beträgt. Bindemittelanteile im unteren Prozentbereich sind bevorzugt. Eine solche Verbindungsschicht zeichnet sich dadurch aus, daß die zu fügenden Teile vor der Keramisierung miteinander fest verbunden sind und der Anteil an freiem Silizium minimiert werden kann.

Durch diesen mehrschichtigen Aufbau einer solchen Reibeinheit ist die Möglichkeit gegeben, den Kernkörper 1 und den Reibkörper 2 hinsichtlich ihrer Materialeigenschaften den ihnen zukommenden Funktionen anzupassen. Der Kernkörper 1 kann so aufgebaut werden, daß er mechanisch stabil ist und eine hohe Wärmespeicher- und Wärmeleitfähigkeit besitzt, darüberhinaus billig herstellbar ist. Hierzu wird beispielsweise der Kernkörper nicht aus einem Faserkörper hergestellt, sondern aus Kostengründen aus Kohlenstoff oder SiC aufgebaut. Im Fall eines kohlenstoffaserverstärkten Kohlenstoffkörpers als Ausgangsmaterial weist dieser eine Porosität von 5 bis 50%, vorzugsweise von 10 bis 30% auf, und die Poren werden mit Silizium infiltriert, das dann, unter Wärmebehandlung, zu Siliziumkarbid umgewandelt wird, wobei die Restporosität auf weniger als 10% eingestellt wird. Der Anteil des Siliziumkarbids im Kernkörper 1 sollte dabei zwischen 10 bis 50% betragen mit einem maxiamlen, nicht zu Siliziumkarbid umgewandelten Anteil an Silizium von 10%. Mit der vorstehenden, geringen Restporosität wird eine hohe Wärmeleitfähigkeit und Wärmekapazität erreicht, darüberhinaus zeigt ein solcher Reibbelag ein günstiges Nässeverhalten. Das Infiltrierverfahren unter Einsatz von flüssigem Silizium ermöglicht, einen dichten Werkstoff nicht nur an der Oberfläche herzustellen, sondern im gesamten Volumen, wodurch ein derart aufgebauter Reibkörper in seiner gesamten Struktur optimale Eigenschaften besitzt, d.h. auch nach einer gewissen Abnutzung der Reibfläche.

Dadurch, daß ein nicht zu Siliziumkarbid umgewandelter Anteil an Silizium im Kernkörper 1 vorhanden ist, werden einerseits kurze Ofenbelegzeiten realisierbar, andererseits wird durch die Einschränkung des nicht zu Siliziumkarbid umgewandelten Siliziums von etwa 10% erreicht, daß zusätzliches Silizium in der Verbindungsschicht beim Fügen der Körper zur Verfügung steht.

Um die Ableitung von Wärme aus dem Kernkörper 1 zu fördern, die auf den Kernkörper 1 über die Reibkörper 2 übertragen wird, wird in den Kernkörper 1 ein wärmeleitfähiger Zusatz eingebracht. Dieser hochwärmeleitfähige Zusatz kann entweder bereits bei der Herstellung des Kernkörpers 1 vor der Pyrolyse eingebracht werden oder er wird im Rahmen der Infiltration zusammen mit dem flüssigen Silizium oder in einem anschließenden Prozeßschritt in die Poren des pyrolysierten Körpers eingelagert.

Im Gegensatz zum Kernkörper 1, der eine hohe mechanische Stabilität sowie eine gute Wärmespeicher- und Wärmeleitfähigkeit besitzen soll, werden die Reibkörper 2 hinsichtlich ihrer Materialeigenschaften so aufgebaut und angepaßt, daß sie eine optimierte Reibeigenschaft besitzen, darüberhinaus den hohen, an den Oberflächen auftretenden Temperaturen, beispielsweise bei einem Bremsvorgang, standhalten. Aus diesem Grund werden die Reibkörper 2 aus einem kohlenstoffaserverstärkten, porösen Kohlenstoffkörper gebildet, der mit flüssigem Silizium zu einem möglichst dichten Werkstoff, insbesondere mit dichter Oberfläche infiltriert wird. Ein solcher Reibkörper ist dazu geeignet, Temperaturen bis zu 2.000°C an seiner Oberfläche aufzunehmen. Um darüberhinaus die Reibeigenschaften der Reibkörper 2 zu unterstützen und definiert einzustellen, können in die Struktur des Reibkörpers 2 reibwertmindernde oder reibwerterhöhende Zusätze eingelagert werden. Als reibwerterhöhender Zusatz wird Siliziumkarbid-Pulver einer Körnung von 0,3 bis 3,0 µm verwendet. Ein solches Pulver kann gezielt in die Struktur des Reibkörpers 2 eingelagert werden. Es hat sich jedoch herausgestellt, daß ein zu hoher Reibwert nicht zu einem optimalen Reibverhalten führt, bzw. ein Abbremsen hochfrequente Töne erzeugt, was im Automobilbau nicht akzeptierbar ist. Aus diesem Grund werden in den Reibkörper 2 auch reibwertmindernde Zusätze eingelagert, wodurch diese vorstehend angesprochene Geräuschentwicklung vermieden werden kann.

Die Figuren 5A und 5B zeigen eine Variante einer Reibheinheit zur Verwendung als Bremseinheit, in der in dem Kernkörper 1 Hohlräume bzw. Kühlkanäle 6 zur Luftzirkulation und damit Innenbelüftung dieser Bremseinheit gebildet sind. Um diese Hohlräume 6 zu bilden, kann der Kernkörper aus zwei Teilen zusammengesetzt werden, wie dies durch die Trennlinie 7 in Figur 5A dargestellt ist oder einteilig aufgebaut sein, wie dies die Figur 5B zeigt. Auf die Innenflächen solcher Teil-Kernkörper können dann Profilierungen in Form von Nuten gebildet werden, die, nach dem Zusammensetzen der beiden Teil-Kernkörper entlang der Verbindungslinie 7, die Hohlräume 6 ergeben. Solche Kernkörper 1 können mit einer Verbindungstechnik miteinander verbunden werden, wie sie zur Verbindung des Kernkörpers 1 mit dem Reibkörper 2 angewandt wird und vorstehend beschrieben ist. Wie anhand der Figuren 5A und 5B ersichtlich ist, können solche Profilierungen in einfacher Weise in den bereitgestellten Vorformen, beispielsweise aus dem kohlenstoffaserverstärkten Kohlenstoff oder dem Graphit, aus denen der Kernkörper 1 in seinem Grundaufbau besteht vorgesehen werden, ausgeführt werden. Falls erforderlich, können solche Kühlkanäle auch auf der Außenseite vorgesehen werden.

Wie anhand der Figuren 3 und 4 zu erkennen ist, ist mit dem angegebenen Verbund-Aufbau der Reibeinheit die Möglichkeit gegeben, eine solche Reibeinheit nach Abnutzung der Reibkörper 2 wieder aufzuarbeiten, indem der verbleibende Kernkörper 1, gegebenenfalls mit einer dünnen Restschicht des oder der damit verbundenen Reibkörper 2, aufgearbeitet wird, indem auf den Kernkörper 1 oder die verbleibende Restschicht des Reibkörpers 2 ein neuer Reibkörper 2 jeweils aufgebracht wird, wobei eine Verfahrensweise angewandt wird, die identisch zu derjenigen ist, wie sie zur Herstellung einer neuen Reibeinheit angewandt wird und in den Figuren 3 und 4 dargestellt ist. Theoretisch besitzt also der Kernkörper 1 aufgrund der Möglichkeit, ihn mit einfachen Mitteln wieder durch neue Reibkörper 2 zu ergänzen, eine unendliche Lebensdauer.

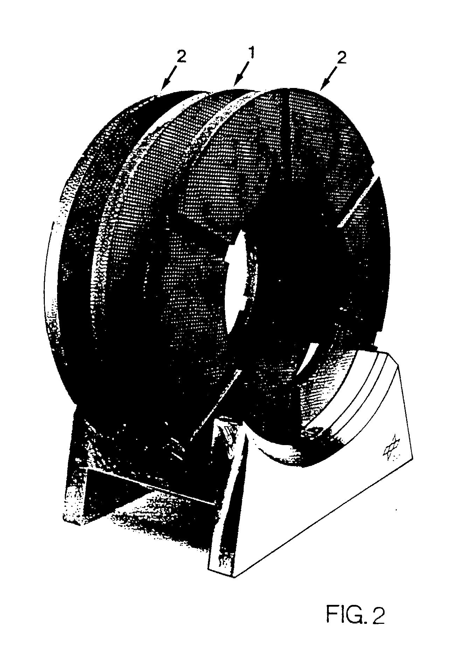

Figur 1A zeigt eine Photographie der Bremsscheibe, wie sie in den Figuren 2 und 3 dargestellt ist, mit zentraler Durchgangsöffnung 3 und mehreren, um den Rand der Durchgangsöffnung 3 verteilten Verbindungsöffnungen 8. Darüberhinaus ist in Figur 1B ein Bremsklotz 9 als gesonderte Reibeinheit gezeigt, der eine Trageplatte 10 sowie eine als Reibkörper dienende Reibplatte 11 aufweist. Sowohl für die Trageplatte 10 als auch der Reibplatte 11 gelten die vorstehenden Ausführungen zu den Figuren 3 und 4. Die Reibplatte 11, die als Reibkörper dient, ist in ihren Materialeigenschaften den Anforderungen angepaßt, entsprechend der Reibplatte 2 der Bremsscheibe, wie dies in der Figur 2 dargestellt und vorstehend erläutert ist. Die Trageplatte 10 kann entsprechend des Kernkörpers 1 der Figur 2 aufgebaut werden; es eignet sich jedoch auch eine andere Trageplatte, beispielsweise in Form einer Metallplatte oder einer Wärmedämmschicht, zum Beispiel aus Zirkonoxid, an der die Reibplatte 11 aus einem kohlenstoffaserverstärkten, porösen Kohlenstoffkörper, der mit Silizium und Siliziumkarbid gefüllt ist, mittels Form- und/oder Kraftschluß befestigt wird, zum Beispiel durch eine Schwalbenschwanzverbindung oder Schrauben aus Metall oder Keramik.

Figur 2 zeigt einen Lamellenaufbau einer Reibeinheit mit Stator-Rotor-Stator-Anordnung. Bei dieser Konstruktion sitzen rotierende und feststehende Reibeinheiten (Rotoren und Statoren) axial hintereinander. Die einzelnen Rotoren und Statoren sind jeweils aus Kernkörper und beidseitig aufgebrachtem Reibkörper aufgebaut, die über die erfindungsgemäße, hochtemperaturbeständige Verbindungsschicht jeweils miteinander verbunden sind. Weiterhin sind in diesem Bild an den jeweils äußeren Flächen der äußeren Reibeinheiten radial verlaufende Ausnehmungen vorhanden, die Befestigungsnuten bilden. Eine solche Reibeinheit, wie sie in der Figur 2 dargestellt ist, kann baukastenartig aufgebaut werden, indem mehrere Kernkörper 1 und Reibkörper 2 bereitgestellt werden und entsprechend den Anforderungen zu einer solchen Mehrfach-Einheit zusammengesetzt werden. Wiederum können die Materialeigenschaften der Kernkörper und der Reibkörper den Anforderungen angepaßt werden, d.h. zum einen hinsichtlich einer guten Wärmeleitfähigkeit und mechanischen Stabilität (Kernkörper) und zum anderen hinsichtlich eines optimierten Reibungskoeffizienten, natürlich auch unter Berücksichtigung einer guten Wärmeleitfähigkeit.

Die Anordnung, wie sie in Figur 2 dargestellt ist, bildet einen Rotor und zwei Statoren, wobei der Rotor durch das Rad eines Flugzeuges angetrieben wird. Die Rotor-Scheibe greift in feststehende Statoren der Bremseneinheit ein. Die Abbremsung wird durch hydraulisches Zusammenpressen der Scheiben bewirkt, wobei in der Oberfläche der Reibkörper 2 Temperaturen bis zu 2.000°C erreicht werden. Der Silizium infiltrierte kohlenstoffaserverstärkte, poröse Kohlenstoffkörper hat den Vorteil, daß er oxydationsbeständig aufgrund der inneren Oxidationsschutzes des SiC ist, sich also durch eine extreme Temperatur- und Korrosionsbeständigkeit auszeichnet.

Die in Figur 6 dargestellte Ausführungsform einer erfindungsgemäßen Reibeinheit weist zwei Reibkörper 2 in Scheibenform auf, die über mehrere Stege 25, die den Kernkörper 1 bilden, mittels einer hochtemperaturbeständigen Verbindungsschicht 4 miteinander verbunden sind, wobei die einzelnen Stege 25 jeweils in Nuten, die in den Reibkörpern 2 gebildet sind, eingesetzt sind. Die Reibeinheit dreht sich, wie durch den Pfeil 23 angedeutet, um die Achse 24. Die Stege 25 bilden die Kontur von Kühlkanälen, die beispielsweise spiralförmig verlaufen.

Figur 7 zeigt eine perspektivische Ansicht einer erfindungsgemäßen Bremsscheibe 12, die aus einem Kernkörper 1 und zwei Reibkörper 2 zusammengesetzt ist. Wie in der Figur 7 zu sehen ist, ist auf der Außenseite des Kernkörpers 1 dieser Bremsscheibe 12 ein Fortsatz 13 mit Verbindungsöffnungen ausgebildet, der einstückig mit dem Kernkörper 1 geformt ist. Wie bereits unter Bezugnahme auf Figur 5 erläutert wurde, ist es möglich, den Kernkörper 1 insbesondere dann, wenn er aus kohlenstoffaserverstärktem Kohlenstoff gebildet wird, in einfacher Weise im Rohzustand auf seine Endkonfiguration zu profilieren bevor er in einem Fertigungsgang ohne eine wesentliche Nachbearbeitung der fertiggestellten Einheit solche Aufnahme- und Verbindungsteile gefertigt werden können. An der Außenseite dieses profilierten Kernkörpers 1 wird über die beschriebene Verbindungsschicht 4 der Reibkörper 2 aufgebracht, der, nachdem er abgenutzt ist, mit der erfindungsgemäßen Verbindungstechnik ersetzt werden kann. Eine Bremsscheibe 12, wie sie in der Figur 7 dargestellt ist, kann an einer Radnabe 14 mittels der Verbindungsöffnungen angeschraubt werden.

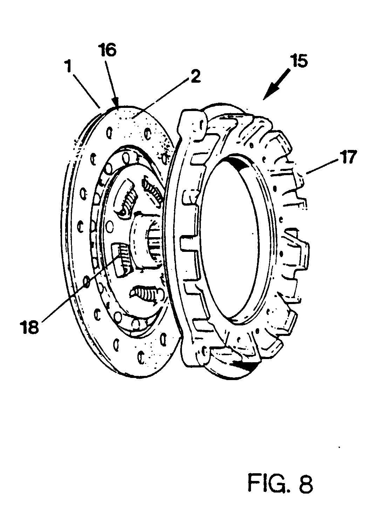

Figur 8 zeigt eine Reibeinheit in Form einer Kupplungsanordnung mit einer Kupplungsmitnehmerscheibe 16 und einer Druckplatte 17 in einer Explosionsansicht. Die Mitnehmerscheibe 16 ist aus einem Kernkörper 1 und einem Reibkörper 2 zusammengesetzt, wobei der Reibkörper 2 beim Einkuppeln in eine entsprechende Reibfläche der Druckplatte 17 eingreift. Auch in diesem Fall kann der Reibkörper 2 nach Abnutzung durch einen neuen Reibkörper 2 ersetzt werden. Weiterhin sind bei dieser Kupplungseinheit 15 ein Nabenteil 18 der Mitnehmerscheibe 16 an dem Kernkörper 1 verankert bzw. in die Matrixstruktur eingearbeitet, das auf eine nicht dargestellte Antriebs- bzw. Abtriebswelle aufgesteckt wird.

Es wurden Bremsscheiben in Hochleistungsbremsen getestet, die entsprechend der Figur 1 aufgebaut waren. Solche Scheiben besaßen einen Außendurchmesser 19 von ca. 280 mm, einen Durchmesser 20 der Verbindungsöffnung von ca. 120 mm sowie eine Gesamtdicke 21 von ca. 13 mm.

Die Daten der Reibeinheit, wie sie in Figur 2 gezeigt ist, waren wie folgt:
- 64 Gewebelagen pro Reibeinheit, die senkrecht zur Drehachse der Scheiben orientiert waren.
- es wurden hochfeste Kohlenstoffasern verwendet
- Keramikanteil ca. 35%
- Kohlenstoffanteil ca. 65%

Es konnte eine sehr dichte Gefügestruktur festgestellt werden, die im Einsatz dazu führt, daß sich kaum Wassermoleküle einlagern bzw. diese geringen Mengen schnell an der Oberfläche verdampfen konnten. Feuchte, die auf den Reibbelag einwirkt, zeigt keinen Einfluß auf das Reibverhalten. SiC und Si-Partikel, die sich mit dem C-Abrieb in die Reibfläche einarbeiten, führen zu einer sehr hohen Verschleißfestigkeit. Die Reibwerte (µ) reichen bis zu 1,0.

## Patentansprüche

1. Reibeinheit zum reibenden Eingriff mit einem Gegenkörper, insbesondere Brems- oder Kupplungskörper, mit mindestens einer frei zugänglichen Reibfläche, die aus einem kohlenstoffaserverstärkten, porösen Kohlenstoffkörper gebildet ist, und mit einem Kernkörper, wobei Kohlenstoffkörper und Kernkörper miteinander verbindbar sind, dadurch gekennzeichnet, daß die Poren des Reibkörpers aus Kohlenstoff zumindest teilweise mit Silizium und Siliziumkarbid gefüllt sind, das durch Infiltrieren von flüssigem Silizium bei einer Temperatur oberhalb von 1410 °C in einer eingestellten Atmosphäre gebildet ist, daß der Reibkörper auf seiner der Reibfläche abgekehrten Seite mit dem Kernkörper über eine im wesentlichen Siliziumkarbid enthaltende hochtemperaturbeständige Verbindungsschicht fest verbunden ist.

2. Reibeinheit nach Anspruch 1, dadurch gekennzeichnet, daß der Kernkörper (1) an zwei zueinander gegenüberliegenden Flächen mit jeweils einem Reibkörper (2) jeweils über eine Siliziumkarbid enthaltende Verbindungsschicht (4) verbunden ist.

3. Reibeinheit nach Anspruche 1 oder 2, dadurch gekennzeichnet, daß der Kernkörper (1) eine Porosität von 5 bis 50X, vorzugsweise von 10 bis 30%, aufweist.

4. Reibeinheit nach Anspruch 3, dadurch gekennzeichnet, daß der Kernkörper (1) aus Kohlenstoff gebildet ist.

5. Reibeinheit nach Anspruch 4, dadurch gekennzeichnet, daß der Kernkörper (1) zumindest teilweise aus Kohlenstoffasern gebildet ist.

6. Reibeinheit nach Anspruch 5, dadurch gekennzeichnet, daß der gesamte Kernkörper (1) aus Kohlenstoffasern gebildet ist, die in Lagen aufeinandergestapelt oder gewickelt sind.

7. Reibeinheit nach Anspruch 6, dadurch gekennzeichnet, daß die Orientierung der Fasern in benachbarten Lagen unterschiedlich ist.

8. Reibeinheit nach Anspruch 7, dadurch gekennzeichnet, daß die Faserlänge zwischen 1 und 5 mm liegt und die kurzen Fasern keine Vorzugsrichtung in der Orientierung aufweisen.

9. Reibeinheit nach Anspruch 1 oder 3, dadurch gekennzeichnet, daß der Kernkörper (1) aus Siliziumkarbid oder einer Mischung aus Siliziumkarbid und Kohlenstoff gebildet ist.

10. Reibeinheit nach einem der Ansprüche 1 bis 3, dadurch gekennzeichnet, daß die Poren des Kernkörpers (1) mit Siliziumkarbid gefüllt sind und die Restporosität weniger als 10% beträgt.

11. Reibeinheit nach Anspruch 10, dadurch gekennzeichnet, daß der Anteil an Siliziumkarbid im Kernkörper (1) zwischen 10% und 50% liegt.

12. Reibeinheit nach Anspruch 10 oder 11, dadurch gekennzeichnet, daß der Anteil an Silizium im Kernkörper (1) bis zu 10% beträgt.

13. Reibeinheit nach einem der Ansprüche 1 bis 12, dadurch gekennzeichnet, daß der Gehalt der Verbindungsschicht (4) an Siliziumkarbid mehr als 50% beträgt.

14. Reibeinheit nach einem der Ansprüche 1 bis 13, dadurch gekennzeichnet, daß die Verbindungsschicht (4) einen Schlickerzusatz aufweist, der aus einem organischen Bindemittel mit einem Restkohlenstoffgehalt von mindestens 40X und ein feinkörniges Pulver aus Kohlenstoff und/oder Silizium gebildet ist und wobei der Bindemittelanteil zwischen 10 und 50% beträgt.

15. Reibeinheit nach Anspruch 14, dadurch gekennzeichnet, daß das Bindemittel ein Phenolharz ist.

16. Reibeinheit nach einem der Ansprüche 1 bis 14, dadurch gekennzeichnet, daß der Reibkörper (2) aus Kohlenstoffasern gebildet ist, die in Lagen aufeinandergestapelt oder gewickelt sind.

17. Reibeinheit nach Anspruch 16, dadurch gekennzeichnet, daß die Orientierung der Fasern in benachbarten Lagen unterschiedlich ist.

18. Reibeinheit nach Anspruch 17, dadurch gekennzeichnet, daß die Faserlänge zwischen 1 und 5 mm liegt und die kurzen Fasern keine Vorzugsrichtung in der Orientierung aufweisen.

19. Reibeinheit nach einem der Ansprüche 1 bis 18, dadurch gekennzeichnet, daß der Reibkörper (2) reibwertmindernde oder reibwerterhöhende Zusätze enthält.

20. Reibeinheit nach Anspruch 19, dadurch gekennzeichnet, daß als reibwertmindernder Zusatz Bornitrid und/oder Aluminiumphosphat eingelagert ist.

21. Reibeinheit nach Anspruch 19, dadurch gekennzeichnet, daß als reibwerterhöhender Zusatz ein Silziumcarbid-Pulver mit einer Körnung von 0,3 bis 3,0 µm eingelagert ist.

22. Reibeinheit nach einem der Ansprüche 1 oder 21, dadurch gekennzeichnet, daß der Reibkörper (2) und/oder der Kernkörper (1) einen hoch wärmeleitfähigen Zusatz enthält.

23. Reibeinheit nach Anspruch 22, dadurch gekennzeichnet, daß der wärmeleitfähige Zusatz in den Poren eingelagert ist.

24. Reibeinheit nach einem der Ansprüche 1 bis 23, dadurch gekennzeichnet, daß in dem Reibkörper (2) und/oder dem Kernkörper (1) Kühlkanäle (6) gebildet sind.

25. Verfahren zur Herstellung einer Reibeinheit zum reibenden Eingriff mit einem Gegenkörper, insbesondere von Brems- oder Kupplungskörpern, mit mindestens einer frei zugänglichen Reibfläche, die aus einem kohlenstoffaserverstärkten, porösen Kohlenstoffkörper gebildet ist, und mit einem Kernkörper, wobei Kohlenstoffkörper und Kernkörper miteinander verbindbar sind, dadurch gekennzeichnet, daß der Kohlenstoffkörper mit flüssigem Silizium bei einer Temperatur oberhalb von 1410 °C in einer eingestellten Atmosphäre infiltriert wird und daß der Reibkörper auf seiner der Reibfläche abgekehrten Seite mit dem Kernkörper mittels einer im wesentlichen Siliziumkarbid enthaltenden, hochtemperaturbeständigen Verbindungsschicht fest verbunden wird.

26. Verfahren nach Anspruch 25, dadurch gekennzeichnet, daß der Kernkörper an zwei zueinander gegenüberliegenden Flächen mit jeweils einem Reibkörper (2) über jeweils eine Siliziumkarbid enthaltende Verbindungsschicht verbunden wird.

27. Verfahren nach Anspruch 25 oder 26, dadurch gekennzeichnet, daß ein Kernkörper verwendet wird, der eine Porosität von 5 bis 50%, vorzugsweise von 10 bis 30%, aufweist.

28. Verfahren nach einem der Ansprüche 25 bis 27, dadurch gekennzeichnet, daß als Kernkörper ein Kohlenstoffkörper eingesetzt wird.

29. Verfahren nach einem der Ansprüche 25 bis 28, dadurch gekennzeichnet, daß ein zumindest teilweise aus Kohlenstoffasern gebildeter Kernkörper eingesetzt wird.

30. Verfahren nach Anspruch 29, dadurch gekennzeichnet, daß der gesamte Kernkörper aus Kohlenstoffasern gebildet wird, die in Lagen aufeinandergestapelt oder gewickelt werden.

31. Verfahren nach Anspruch 30, dadurch gekennzeichnet, daß die Fasern in benachbarten Lagen unterschiedlich orientiert werden.

32. Verfahren nach Anspruch 29, dadurch gekennzeichnet, daß Fasern mit einer Länge zwischen 1 und 5 mm eingesetzt werden, wobei den kurzen Fasern keine Vorzugsorientierung gegeben wird.

33. Verfahren nach einem der Ansprüche 25 bis 27, dadurch gekennzeichnet, daß ein Kernkörper aus Siliziumkarbid oder einer Mischung aus Siliziumkarbid und Kohlenstoff eingesetzt wird.

34. Verfahren nach einem der Ansprüche 27 bis 33, dadurch gekennzeichnet, daß in die Poren des Kernkörpers Silizium infiltriert wird, das unter Wärmebehandlung überwiegend zu Siliziumkarbid umgewandelt wird, wobei eine Restporosität von weniger als 10% eingestellt wird.

35. Verfahren nach Anspruch 34, dadurch gekennzeichnet, daß Siliziumkarbid im Kernkörper mit einem Anteil zwischen 10 und 50% gebildet wird.

36. Verfahren nach Anspruchen 34 oder 35, dadurch gekennzeichnet, daß ein nicht zu Siliziumkarbid umgewandelter Anteil an Silizium im Kernkörper auf bis zu 10% eingestellt wird.

37. Verfahren nach einem der Ansprüche 25 bis 36, dadurch gekennzeichnet, daß der Gehalt der Verbindungsschicht an Siliziumkarbid auf mehr als 50X eingestellt wird.

38. Verfahren nach einem der Ansprüche 25 bis 37, dadurch gekennzeichnet, daß in die Verbindungsschicht ein Schlickerzusatz aus einem organischen Bindemittel mit einem Restkohlenstoffgehalt von mindestens 40% und einem feinkörnigen Pulver aus Kohlenstoff und/oder Silizium eingebracht wird, bei dem der Bindemittel-Anteil zwischen 10 bis 50% beträgt.

39. Verfahren nach einem der Ansprüche 25 bis 38, dadurch gekennzeichnet, daß dem Reibkörper reibwertmindernde oder reibwerterhöhende Zusätze zugegeben werden.

40. Verfahren nach Anspruch 39, dadurch gekennzeichnet, daß als reibwertmindernder Zusatz Bornitrid und/oder Aluminiumphosphat eingelagert werden.

41. Verfahren nach Anspruch 39, dadurch gekennzeichnet, daß als reibwerterhöhender Zusatz Siliziumkarbid-Pulver einer Körnung von 0,3 bis 3,0 µm eingelagert wird.

42. Verfahren nach Anspruch 25, dadurch gekennzeichnet, daß in den Reibkörper und/oder den Kernkörper ein hoch wärmeleitfähiger Zusatz eingebracht wird.

43. Verfahren nach einem der Ansprüche 25 bis 42, dadurch gekennzeichnet, daß vor Bildung der Verbindungsschicht zwischen Reibkörper und Kernkörper eine Einlage aus einem porösen, pyrolysierbaren Material auf Cellulosebasis eingelegt wird.

44. Verfahren nach Anspruch 43, dadurch gekennzeichnet, daß Papier, Pappe und/oder Papierfilz als Einlage zwischengefügt wird.

45. Verfahren nach Anspruch 43 oder 44, dadurch gekennzeichnet, daß die Einlage in einer Dicke zwischen 0,1 und 1 mm zwischengefügt wird.

46. Verfahren nach einem der Ansprüche 25 bis 42, dadurch gekennzeichnet, daß vor Bildung der Verbindungsschicht zwischen Reibkörper und Kernkörper eine Einlage aus einem Kohlenstoffvlies oder einer Kohlenstoffmatte eingelegt wird.

## Claims

1. Friction unit for frictional engagement with a counter-body, especially brake or clutch body, with at least one freely accessible friction surface, which is formed of a carbon fiber-reinforced, porous carbon body, and with a core body, wherein the carbon body and the core body are connectable with each other, characterized in that the pores of the friction body of carbon are filled at least partially with silicon and silicon carbide, which is formed at least partially by infiltrating with fluid silicon at a temperature above 1410°C in a controlled atmosphere, that the friction body is bonded to the core body unit on its side facing away from the friction surface by a bonding layer with high thermal stability containing substantially silicon carbide.

2. Friction unit according to claim 1, characterized in that the core body (1) is bonded at two surfaces opposite one another each to a friction body (2) through a bonding layer (4) containing silicon carbide.

3. Friction unit according to claims 1 or 3, characterized in that the core body (1) has a porosity of 5 to 50%, preferably of 10 to 30%.

4. Friction unit according to claim 3, characterized in that the core body (1) is formed of carbon.

5. Friction unit according to claim 4, characterized in that the core body (1) is formed at least partially of carbon fibres.

6. Friction unit according to claim 5, characterized in that the entire core body (1) is formed of carbon fibres which are stacked or wound in layers one on the other.

7. Friction unit according to claim 6, characterized in that the orientation of the fibres is different in adjacent layers.

8. Friction unit according to claim 7, characterized in that the fiber length is between 1 and 5 mm and the short fibres have no prefential direction on their orientation.

9. Friction unit according to claims 1 or 3, characterized in that the core body (1) is formed of silicon carbide or a mixture of silicon carbide and carbon.

10. Friction unit according to claims 1 or 3, characterized in that the pores of the core body (1) are filled with silicon carbide and the residual porosity is less than 10%.

11. Friction unit according to claim 10, characterized in that the content of silicon carbide in the core body (1) is between 10% and 50%.

12. Friction unit according to claims 10 or 11, characterized in that the silicon carbide content of silicon in the core body (1) is up to 10%.

13. Friction unit according to claims 1 or 12, characterized in that the silicon carbide content of the bonding layer (4) amounts to more than 50%.

14. Friction unit according to any one of claims 1 to 13, characterized in that the bonding layer (4) has a slurry additive which is formed of an organic bonding agent with a residual carbon content of at least 40% and a fine-grained powder of carbon and/or silicon and wherein the bonding agent content being between 10% and 50%.

15. Friction unit according to claim 14, characterized in that the bonding agent is a phenolic resin.

16. Friction unit according to any one of claims 1 to 14, characterized in that the friction body (2) is formed of carbon fibres which are stacked or wound in layers one on the other.

17. Friction unit according to claim 16, characterized in that the orientation of the fibers is different in adjacent layers.

18. Friction unit according to claim 17, characterized in that the fiber length is between 1 and 5 mm and the short fibres have no preferred direction in the orientation.

19. Friction unit according to claims 1 to 18, characterized in that friction body (2) contains friction value reducing or friction value increasing additives.

20. Friction unit according to claim 19, characterized in that boron nitride and/or aluminum phosphate is embedded at friction value reducing additive.

21. Friction unit according to claim 19, characterized in that a silicon carbide powder with a grain size of 0,3 to 3,0 µm is embedded as a friction value increasing additive.

22. Friction unit according to claim 1 or 21, characterized in that the friction body (2) and/or the core body (1) contains a highly heat-conductive additive.

23. Friction unit according to claim 22, characterized in that the heat-conductive additive is embedded in the pores.

24. Friction unit according to any one of claims 1 to 23, characterized in that the cooling passages (6) are formed in the friction body (2) and/or in the core body (1).

25. Method for the manufacture of a friction unit for frictional engagement with a counter-body, especially of brake and clutch bodies, having at least a freely accessible friction surface which is prepared of a carbon fiber reinforced porous carbon body, and with a core body, wherein the carbon body and the core body are joined together, characterized in that the carbon body is infiltrated with fluid silicon at a temperature in the range above 1410°C in an controlled atmosphere and that the friction body is joined with the core body on its surface opposite to the core body by a bonding layer with high thermal stability containing substantially silicon carbide.

26. Method according to claim 25, characterized in that the core body is joined at two surfaces opposite one another to a friction body (2) by a bonding layer containing a silicon carbide.

27. Method according to any one of claims 25 or 26, characterized in that a core body is used which has a porosity of 5 to 50%, preferably of 10 to 30%.

28. Method according to any one of claims 25 to 27, characterized in that a carbon body is used as core body.

29. Method according to any one of claims 25 to 28, characterized in that a core body formed at least partially of carbon fibers is used.

30. Method according to claim 29, characterized in that the entire core body is formed of carbon fibres which are stacked or wound on one another in layers.

31. Method according to claim 30, characterized in that the fibres in adjacent layers are oriented differently.

32. Method according to claim 29, characterized in that fibres of a length between 1 and 5 mm are used, the short fibers not being given any preferential orientation.

33. Method according to any one of claims 25 to 27, characterized in that a core body of silicon carbide or a mixture of silicon carbide and carbon is used.

34. Method according to any one of claims 27 to 33, characterized in that silicon is infiltrated into the pores of the core body, which is converted with heat treatment mainly to silicon carbide, a residual porosity of less than 10% being established.

35. Method according to claim 34, characterized in that silicon carbide is formed in the core body with a content between 10 and 50%.

36. Method according to any one of claims 34 or 35, characterized in that a portion of silicon which is not converted to silicon carbide is adjusted to up to 10% in the core body.

37. Method according to any one of claims 25 to 36, characterized in that the content of silicon carbide in the bonding layer is set at more than 50%.

38. Method according to any one of claims 25 to 37, characterized in that a slurry additive of an organic binding agent with a residual carbon content of at least 40% and a fine-grained powder of carbon and/or silicon is put into the bonding layer, the bonding agent content amounting to between 10 and 50%.

39. Method according to any one of claims 25 to 38, characterized in that friction value reducing or friction value increasing additives are added to the friction body.

40. Method according to claim 39, characterized in that boron nitride and/or aluminum phosphate are added as friction value reducing additive.

41. Method according to claim 39, characterized in that silicon carbide powder in a grain size of 0,3 to 3,0 µm is embedded as friction value increasing additive.

42. Method according to claim 25, characterized in that a highly heat-conductive additive is put into a friction body and/or the core body.

43. Method according to any one of claims 25 to 42, characterized in that prior to the formation of the bonding layer between friction body and core body an insert of a porous pyrolyzable material on a cellulose basis is interposed.

44. Method according to claim 43, characterized in that paper, cardboard and/or paper felt is interposed as insert.

45. Method according to claim 43 or 44, characterized in that the insert is interposed in a thickness between 0,1 and 1 mm.

46. Method according to any one of claims 25 to 42, characterized in that prior to the formation of the bonding layer between friction body and core body an insert of a carbon fleece or a carbon mat is interposed.

## Revendications

1. Unité de friction pour l'engrènement par friction avec un corps antagoniste, en particulier un corps de freinage ou d'accouplement avec au moins une surface de friction accessible librement qui est formée par un corps poreux en carbone, renforcé par des fibres de carbone, et avec un corps de noyau, le corps en carbone et le corps de noyau pouvant être reliés l'un à l'autre, caractérisée en ce que les pores du corps de friction en carbone sont remplis tout au moins partiellement avec du silicium et du carbure de silicium qui est formé par l'infiltration de silicium liquide à une température supérieure à 1410 °C dans une atmosphère ajustée, que le corps de friction est relié de manière solide, sur son côté détourné de la surface de friction, au corps de noyau par une couche de liaison contenant essentiellement du carbure de silicium et résistante aux températures élevées.

2. Unité de friction selon la revendication 1, caractérisée en ce que le corps de noyau (1) est relié, sur deux surfaces opposées l'une à l'autre, à respectivement un corps de friction (2) respectivement par une couche de liaison (4) contenant du carbure de silicium.

3. Unité de friction selon la revendication 1 ou 2, caractérisée en ce que le corps de noyau (1) présente une porosité de 5 à 50%, de préférence de 10 à 30%.

4. Unité de friction selon la revendication 3, caractérisée en ce que le corps de noyau (1) est formé en carbone.

5. Unité de friction selon la revendication 4, caractérisée en ce que le corps de noyau (19) est formé tout au moins partiellement en fibres de carbone.

6. Unité de friction selon la revendication 5, caractérisée en ce que l'ensemble du corps de noyau (1) est formé par des fibres de carbone qui sont empilées les unes sur les autres ou enroulées en couches.

7. Unité de friction selon la revendication 6, caractérisée en ce que l'orientation des fibres dans des couches voisines est différente.

8. Unité de friction selon la revendication 7, caractérisée en ce que la longueur des fibres se situe entre 1 et 5 mm et que les fibres courtes ne présentent pas de sens préférentiel dans l'orientation.

9. Unité de friction selon la revendication 1 ou 3, caractérisée en ce que le corps de noyau (1) est formé par du carbure de silicium ou un mélange de carbure de silicium et de carbone.

10. Unité de friction selon l'une des revendications 1 à 3, caractérisée en ce que les pores du corps de noyau (1) sont remplis avec du carbure de silicium et que la porosité résiduelle est inférieure à 10 %.

11. Unité de friction selon la revendication 10, caractérisée en ce que le taux de carbure de silicium dans le corps de noyau (1) se situe entre 10 % et 50 %.

12. Unité de friction selon la revendication 10 ou 11, caractérisée en ce que le taux de silicium dans le corps de noyau (1) est d'au plus 10 %.

13. Unité de friction selon l'une des revendications 1 à 12, caractérisée en ce que le taux de carbure de silicium de la couche de liaison (4) est supérieur à 50 %.

14. Unité de friction selon l'une des revendications 1 à 13, caractérisée en ce que la couche de liaison (4) présente une addition de barbotine qui est formée par un liant organique avec un taux de carbone résiduel d'au moins 40 % et une poudre à grains fins de carbone et/ou de silicium, et le taux de liant étant situé entre 10 et 50 %.

15. Unité de friction selon la revendication 14, caractérisée en ce que le liant est une résine phénolique.

16. Unité de friction selon l'une des revendications 1 à 14, caractérisée en ce que le corps de friction (2) est formé par des fibres de carbone qui sont empilées les unes sur les autres ou enroulées en couches.

17. Unité de friction selon la revendication 16, caractérisée en ce que l'orientation des fibres dans des couches voisines est différente.

18. Unité de friction selon la revendication 17, caractérisée en ce que la longueur des fibres se situe entre 1 et 5 mm et que les fibres courtes ne présentent pas de sens préférentiel dans l'orientation.

19. Unité de friction selon l'une des revendications 1 à 18, caractérisée en ce que le corps de friction (2) contient des additifs diminuant ou augmentant le coefficient de friction.

20. Unité de friction selon la revendication 19, caractérisée en ce que du nitrure de bore et/ou du phosphate d'aluminium est intercalé comme additif diminuant le coefficient de friction.

21. Unité de friction selon la revendication 19, caractérisée en ce qu'une poudre de carbure de silicium avec une granularité de 0,3 à 3,0 µm est intercalée comme additif augmentant le coefficient de friction.

22. Unité de friction selon l'une des revendications 1 ou 21, caractérisée en ce que le corps de friction (2) et/ou le corps de noyau (1) contient un additif à conductivité thermique élevée.

23. Unité de friction selon la revendication 22, caractérisée en ce que l'additif thermoconducteur est intercalé dans les pores.

24. Unité de friction selon l'une des revendications 1 à 23, caractérisée en ce que des canaux de refroidissement (6) sont formés dans le corps de friction (2) et/ou le corps de noyau (1).

25. Procédé pour la fabrication d'une unité de friction pour l'engrènement par friction avec un corps antagoniste, en particulier un corps de freinage ou d'accouplement avec au moins une surface de friction accessible librement qui est formée par un corps poreux en carbone, renforcé par des fibres de carbone, et avec un corps de noyau, le corps en carbone et le corps de noyau pouvant être reliés l'un à l'autre, caractérisé en ce que le corps de carbone est infiltré de silicium liquide à une température supérieure à 1410 °C dans une atmosphère ajustée et que le corps de friction est relié de manière solide, sur son côté détourné de la surface de friction, au corps de noyau au moyen d'une couche de liaison contenant essentiellement du carbure de silicium et résistante aux températures élevées.

26. Procédé selon la revendication 25, caractérisé en ce que le corps de noyau est relié sur deux surfaces opposées l'une à l'autre à respectivement un corps de friction (2) respectivement par une couche de liaison contenant du carbure de silicium.

27. Procédé selon la revendication 25 ou 26, caractérisé en ce qu'un corps de noyau est utilisé qui présente une porosité de 5 à 50%, de préférence de 10 à 30 %.

28. Procédé selon l'une des revendications 25 à 27, caractérisé en ce qu'un corps de carbone est mis en place comme corps de noyau.

29. Procédé selon l'une des revendications 25 à 28, caractérisé en ce qu'un corps de noyau formé au moins partiellement par des fibres de carbone est mis en place.

30. Procédé selon la revendication 29, caractérisé en ce que l'ensemble du corps de noyau est formé par des fibres de carbone qui sont empilées les unes sur les autres ou enroulées en couches.

31. Procédé selon la revendication 30, caractérisé en ce que les fibres dans des couches voisines sont orientées de manière différente.

32. Procédé selon la revendication 29, caractérisé en ce que des fibres d'une longueur entre 1 et 5 mm sont mises en place, aucune orientation de préférence n'étant donnée aux courtes fibres.

33. Procédé selon l'une des revendications 25 à 27, caractérisé en ce qu'un corps de noyau en carbure de silicium ou en un mélange de carbure de silicium et de carbone est mis en place.

34. Procédé selon l'une des revendications 27 à 33, caractérisé en ce que du silicium est infiltré dans les pores du corps de noyau, silicium qui est transformé par traitement thermique en grande partie en carbure de silicium, une porosité résiduelle inférieure à 10 % étant ajustée.

35. Procédé selon la revendication 34, caractérisé en ce que du carbure de silicium est formé dans le corps de noyau avec un taux entre 10 et 50 %.

36. Procédé selon les revendications 34 ou 35, caractérisé en ce qu'un taux de silicium non transformé en carbure de silicium est ajusté dans le corps de noyau jusqu'à 10 %.

37. Procédé selon l'une des revendications 25 à 36, caractérisé en ce que le taux de carbure de silicium de la couche de liaison est ajusté à plus de 50 %.

38. Procédé selon l'une des revendications 25 à 37, caractérisé en ce qu'une addition de barbotine composée d'un liant organique avec un taux de carbone résiduel d'au moins 40 % et d'une poudre à grains fins de carbone et/ou de silicium est mise en place dans la couche de liaison, addition de barbotine dans laquelle le taux de liant est situé entre 10 et 50 %.

39. Procédé selon l'une des revendications 25 à 38, caractérisé en ce que des additifs réduisant ou augmentant le coefficient de friction sont ajoutés au corps de friction.

40. Procédé selon la revendication 39, caractérisé en ce que du nitrure de bore et/ou du phosphate d'aluminium est intercalé comme additif réduisant le coefficient de friction.

41. Procédé selon la revendication 39, caractérisé en ce que de la poudre de carbure de silicium d'une granularité de 0,3 à 3,0 µm est intercalée comme additif augmentant le coefficient de friction.

42. Procédé selon la revendication 25, caractérisé en ce qu'un additif à conductivité thermique élevée est mis en place dans le corps de friction et/ou le corps de noyau.

43. Procédé selon l'une des revendications 25 à 42, caractérisé en ce qu'avant la formation de la couche de liaison, une garniture constituée par un matériau poreux pyrolisable à base de cellulose est mise en place entre le corps de friction et le corps de noyau.

44. Procédé selon la revendication 43, caractérisé en ce que du papier, du carton et/ou du feutre de papier est intercalé comme garniture.

45. Procédé selon la revendication 43 ou 44, caractérisé en ce que la garniture d'une épaisseur entre 0,1 et 1 mm est intercalée.

46. Procédé selon l'une des revendications 25 à 42, caractérisé en ce qu'avant la formation de la couche de liaison, une garniture constituée par un non-tissé de carbone ou une natte de carbone est mise en place entre le corps de friction et le corps de noyau.
